(19) Europäisches Patentamt
European Patent Office
Office européen des brevets

(11) **EP 3 709 627 A1**

(12) **EUROPEAN PATENT APPLICATION**

(43) Date of publication:
**16.09.2020 Bulletin 2020/38**

(51) Int Cl.:
*H04N 5/232* (2006.01)　　　*G11B 27/34* (2006.01)
*G11B 27/28* (2006.01)　　　*G11B 27/031* (2006.01)
*A45D 42/00* (2006.01)

(21) Application number: **19189123.3**

(22) Date of filing: **30.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2019　CN 201910184850**

(71) Applicant: **CAL-COMP BIG DATA, INC**
**Shenkeng, New Taipei City 222 (TW)**

(72) Inventor: **LIN, Yung-Hsuan**
**222 New Taipei City (TW)**

(74) Representative: **2K Patentanwälte Blasberg Kewitz & Reichel**
**Partnerschaft mbB**
**Schumannstrasse 27**
**60325 Frankfurt am Main (DE)**

(54) **METHOD FOR AUTOMATICALLY DETECTING AND PHOTOGRAPHING FACE IMAGE**

(57)　　A method for detecting and photographing face image used by a mirror device (2) includes: real-time detecting a face image of a user (4) through an image capturing module (22); determining whether a distance between the face image and the mirror device (2) is within a threshold; displaying an indication of moving forwards/backwards if the distance exceeds the threshold; determining whether a contour of the face image exceeds default boundary values of the mirror device (2); displaying an indication for moving leftwards, rightwards, upwards, or downwards if the contour exceeds any of the default boundary values; determining whether an angle of the face image with respect to the mirror device (2) is oblique; displaying an indication of adjusting the angle if the face image is oblique; taking a photo of the face image automatically whenever the distance is within the threshold, the contour is within each default boundary and the angle is not oblique.

FIG.5

EP 3 709 627 A1

**Description**

BACKGROUND OF THE INVENTION

1.Technical Field

The technical field relates to a method for detecting and photographing, and specifically relates to a method for detecting a face image and photographing the face image.

2.Description of Related Art

Following the improvement of time, more and more technologies are provided to assist users in daily activities.

Recently, there's a kind of smart mirror device is released to the market. This smart mirror device is arranged with at least a reflection mirror, a display module, and an image capturing module, which uses the reflection mirror to reflect user's face, uses the image capturing module to capture user's face image, analyzes the face image, and displays an analyzing result and relevant make-up information on the display module. Therefore, the user may accomplish his/her make-up action according to the suggestion and guidance provided by the smart mirror device, which is very convenient

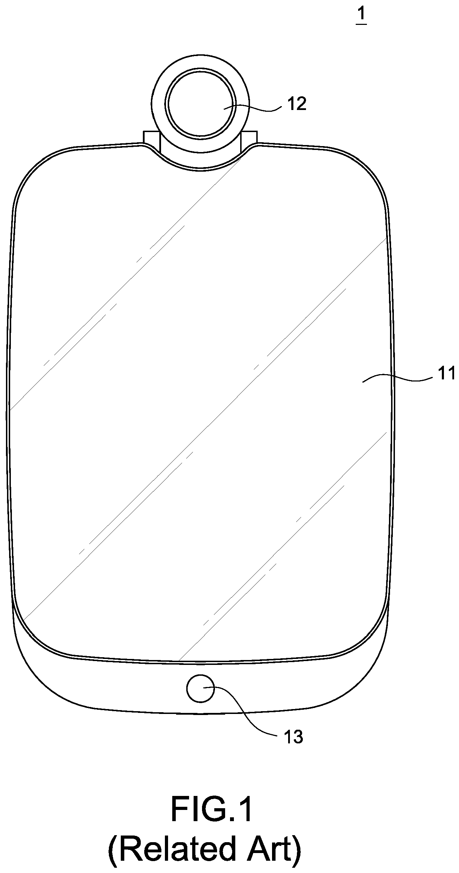

FIG. 1 is a schematic diagram of smart mirror device according to one embodiment of related art. As disclosed in FIG. 1, the smart mirror device 1 mainly includes a display module 11, an image capturing module 12, and a button module 13, wherein the display module 11 and a reflection mirror are integrated into one, therefore, the display module 11 may reflect user's face and display relevant information (such as a photo taken by the image capturing module, or an analyzing result) as the same time.

Generally speaking, the smart mirror device 1 uses the image capturing module 12 to take a photo of a user, and the smart mirror device 1 performs analysis to a face image in the photo. The distance between the user and the image capturing module 12 will affect the resolution of the photo taken by the image capturing module 12, and the resolution will consequently affect the accuracy of final analyzing result. Thus, how to make the user to comply with the instructions given by the smart mirror device 1 for taking a photo that satisfies the requirements of the analysis, and ensure that different photos respectively taken at different times can have same or similar resolutions, is really a tough problem to be solved.

Besides, the angle of the face image located in the photo may also affect the final analyzing result performed by the smart mirror device 1 (for example, the present percentages of the left face and the right face are way too different), or easily causes shadows on the photo and affect the analyzing result. Thus, how to prevent the image capturing module 12 from photographing the face image with seriously oblique angle and leading the analyzing result to abnormal, is also a problem that should be solved by the skilled person in the art.

SUMMARY OF THE INVENTION

The invention is directed to a method for automatically detecting and photographing face image, which may ensure that a photo will be automatically taken only if a distance between the face image and an image capturing module is adequate, a contour of the face image does not exceed default boundary values of a smart mirror device, and an angle of the face image with respect to the smart mirror device is not oblique, so the taken photo may be accurately used in follow-up processing and analyzing.

In one of the exemplary embodiments, the aforementioned method is basically used in a smart mirror device and includes following steps: real-time detecting a face image of a user through an image capturing module; determining whether a distance between the face image and the smart mirror device is within a threshold; displaying an indication of moving forwards/backwards if the distance exceeds the threshold; determining whether a contour of the face image exceeds default boundary values of the smart mirror device; displaying an indication for moving leftwards, rightwards, upwards, or downwards if the contour exceeds any of the default boundary values; determining whether an angle of the face image with respect to the smart mirror device is oblique; displaying an indication of adjusting the angle if the face image is determined oblique; and, taking a photo of the face image automatically whenever the distance is within the threshold, the contour is within each default boundary and the angle is not oblique.

In comparison with related art, the present invention only photographs a face image of a user when the distance, position and angle of the face image with respect to the smart mirror device are all satisfying the analyzing requirements, therefore, the smart mirror device can photographing different face images of different users at different times for respectively generating multiple photos with the same or similar size and resolution, so as to improve the analysis accuracy of a skin analyzing procedure performed by the smart mirror device based on these photos.

BRIEF DESCRIPTION OF THE DRAWINGS

FIG. 1 is a schematic diagram of smart mirror device according to one embodiment of related art.
FIG. 2 is a block diagram of smart mirror device according to one embodiment of the present invention.
FIG. 3 is a schematic diagram of focusing frame according to an embodiment of the present invention.
FIG. 4 is a schematic diagram showing photo taking action according to an embodiment of the present invention.
FIG. 5 is a photographing flowchart according to an embodiment of the present invention.
FIG. 6 is a flowchart of distance determination according to an embodiment of the present invention.
FIG. 7 is a flowchart of boundary determination according to an embodiment of the present invention.
FIG. 8 is a flowchart of oblique determination according to an embodiment of the present invention.
FIG. 9 is a schematic diagram of detecting action according to a first embodiment of the present invention.
FIG. 10 is a schematic diagram of detecting action according to a second embodiment of the present invention.
FIG. 11 is a schematic diagram of detecting action according to a third embodiment of the present invention.
FIG. 12 is a schematic diagram of detecting action according to a fourth embodiment of the present invention.
FIG. 13 is a schematic diagram of detecting action according to a fifth embodiment of the present invention.

DETAILED DESCRIPTION OF THE INVENTION

The invention is directed to a method for automatically identifying users of body-fat meter, which can automatically identify user identity right after the measurement of the user is finished.

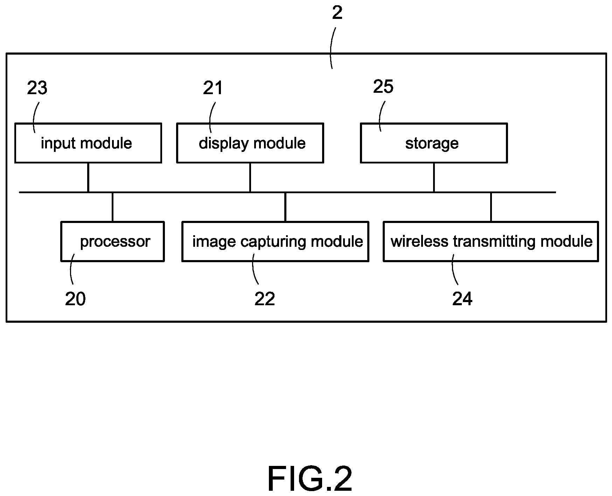

The present invention discloses a method for automatically detecting and photographing face image (referred to as the photographing method hereinafter), the photographing method is mainly applied to a smart mirror device as disclosed in FIG. 2, so as to lead the smart mirror device to take photos that satisfy analyzing requirements of analyzing procedures of the smart mirror device, therefore the smart mirror device may perform skin analysis for the user according to the photos properly taken by the smart mirror device.

FIG. 2 is a block diagram of smart mirror device according to one embodiment of the present invention. As shown in FIG. 2, a smart mirror device 2 disclosed in the present invention is mainly including a processor 20, a display module 21, an image capturing module 22, an input module 23, a wireless transmitting module 24, and a storage 25, wherein the processor 20, the display module 21, the image capturing module 22, the input module 23, the wireless transmitting module 24, and the storage 25 are electrically connected with each other through internal buses.

In the present invention, the smart mirror device 2 may continually control the image capturing module 22 to detect external image after being activated. The processor 20 performs an image recognition procedure to the external image detected by the image capturing module 22 for determining whether a face image of a user is existing in the external image or not. In one of the exemplary embodiments, the processor 20 of the smart mirror device 2 may perform a human face recognition procedure to the external image for determining whether a face image of a specific user (such as a registered member) is existing in the external image or not. In another one of the exemplary embodiments, the processor 20 of the smart mirror device 2 only performs a simple recognition procedure to the external image for determining whether an image relevant to a human face is existing in the external image and regardless the identity of the user.

After determining that a face image does exist in the external image, the processor 20 further determines if the parameters of the face image may satisfy a preset photographing condition or not. In one of the exemplary embodiments, the processor 20 may automatically control the image capturing module 22 to take a photo of a recognized face image only if the parameters of the recognized face image satisfying the above mentioned photographing condition, therefore, the photo taken by the image capturing module 22 (such as a camera or the like) may involve a face image that has one or more parameters satisfying the photographing condition.

In particular, the smart mirror device 2 may display the taken photo through the display module 21, such as a screen, a monitor, an LCD display or the like. The smart mirror device 2 may receive external operations performed by the user through the input module 23, such as buttons, a keyboard, a mouse, a touch pad, a touch screen, etc., so the user is allowed to confirm whether to use the photo currently taken by the image capturing module 22 to perform a skin analyzing procedure of the smart mirror device 2. In one of the exemplary embodiments, the skin analyzing procedure may be stored in the storage 25, such as a hard disk (HD), an optical disk (CD), a solid-state disk (SSD) or the like, not limited thereto.

Besides, the smart mirror device 2 may connect with external mobile devices through the wireless transmitting module 24, so as to transmit the photo currently taken as well as an analyzing result of the skin analyzing procedure to remote mobile device(s) for the user to see with ease.

In one of the exemplary embodiments, the aforementioned photographing condition may be, for example, a distance between the face image and the smart mirror device 2 (in particular, it can also be a distance between the user stands and the image capturing module 22), a relative position of the face image and the smart mirror device 2 (in particular, it can also be a relative position of the user and the image capturing module 22), an angle of the smart mirror device 2 with respect to the face image (in particular, it can also be an angle of the image capturing module 22 with respect to the user), etc., but not limited thereto.

In particular, the distance between the face image and the image capturing module 22 (i.e., the smart mirror device 2) may affect the resolution of the photo taken by the image capturing module 22, and the resolution of the photo will consequently affect the accuracy of the skin analyzing procedure performed by the processor 20 based on the photo. In order to ensure that every photo taken by the smart mirror device 2 may have the same or similar resolution, the smart mirror device 2 has been set to consider the distance between the face image and the smart mirror device 2 as one of the multiple photographing conditions. In the scenario that the face image is too close to or too far from the smart mirror device 2, the smart mirror device 2 will not photograph the face image of the user. In other words, the smart mirror device 2 is restricted to take user's photo if the user stands too close to the smart mirror device 2 or too far from the smart mirror device 2.

If the face image involved in the photo taken by the smart mirror device 2 is representing a side face or a lopsided face, the skin analyzing procedure may also fail to analyze the face image of the photo accurately. For preventing the photo from being taken with bad or oblique angle, the smart mirror device 2 of the present invention may also be set to consider the relative position and the relative angle of the face image with respect to the smart mirror device 2 as parts of the multiple photographing conditions. If the position of the face image in the photo is inadequate or the angle of the face image in the photo is seriously oblique, the smart mirror device 2 may not take the user's photo.

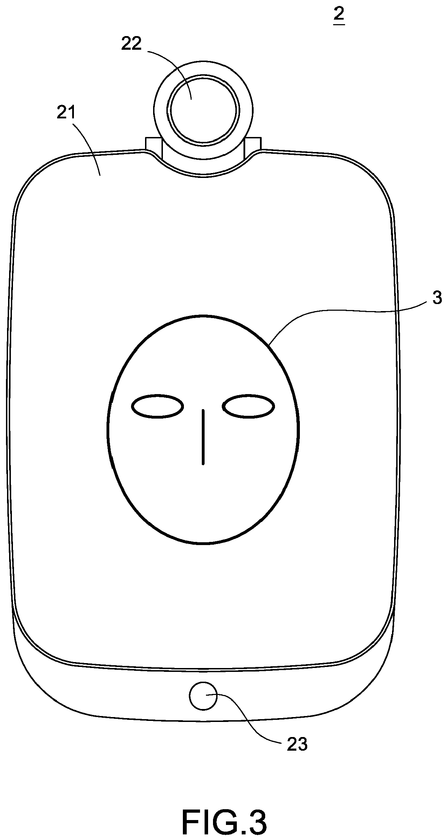

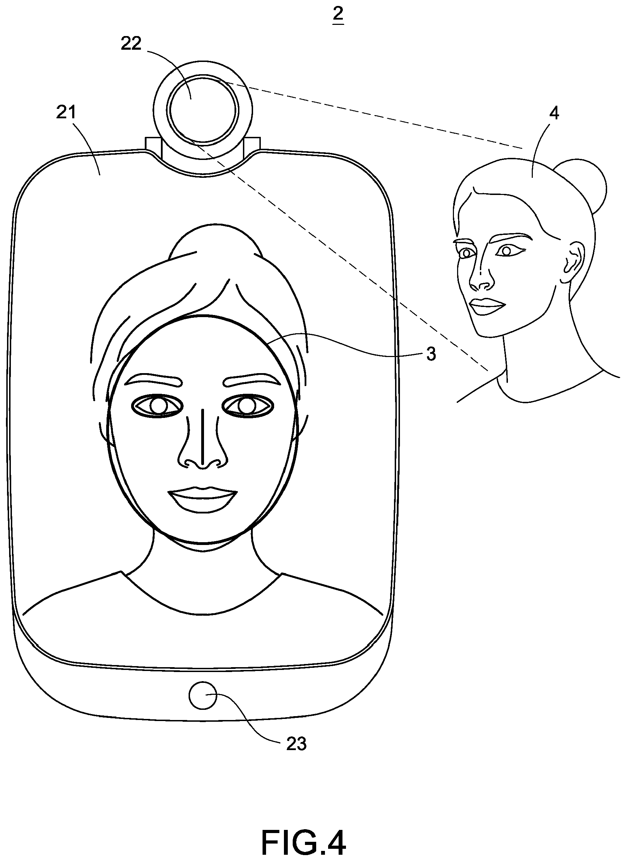

Refer to FIG. 3 and FIG. 4, wherein FIG. 3 is a schematic diagram of focusing frame according to an embodiment of the present invention, and FIG. 4 is a schematic diagram showing photo taking action according to an embodiment of the present invention.

As shown in FIG. 3, the processor 20 of the smart mirror device 2 in this embodiment may generate a focusing frame 3 based on the preset photographing conditions (such as the distance, the relative position, and the relative angle as rendered above), and displays the generated focusing frame 3 on the display module 21. In the embodiment of FIG. 3 the focusing frame 3 is generated and displayed according to the shape of human's face (which is in an oval shape), so the user may be guided to move his/her head to fit the focusing frame 3 displayed on the display module 21 for satisfying the photographing condition(s) with ease. In another embodiment, the focusing frame 3 may also be generated based on other shapes (such as round shape, square shape, etc.).

As shown in FIG. 4, when a user 4 stands in front of the smart mirror device 2 and the face of the user 4 is approximately overlaps with the focusing frame 3 on the display module 21, it means that the distance between the face image and the smart mirror device 2 is adequate, the relative position of the face image is located within default boundaries of the smart mirror device 2, and the relative angle of the smart mirror device 2 with respect to the face image is not oblique. As a result, the smart mirror device 2 is allowed to automatically control the image capturing module 22 to take a photo of the face image of the user 4 once the face image of the user 4 is determined overlapping with the focusing frame 3 approximately. Therefore, the smart mirror device 2 may perform the aforementioned skin analyzing procedure to the photo taken by the image capturing module 22 and obtains one or more analyzing results about the face image of the user 4 after performing the skin analyzing procedure.

It is worth saying that, the manufacturer of the smart mirror device 2 may set one or more default boundary values of the smart mirror device 2 (such as a left boundary value, a right boundary value, a top boundary value, and a bottom boundary value) in advance based on the photographing condition(s) required by the skin analyzing procedure, and the processor 20 of the smart mirror device 2 may automatically generate the aforementioned focusing frame 3 according to these default boundary values. In other words, once the face image of the user 4 is overlapped with the focusing frame 3, the distance between the face image and the smart mirror device 2, the relative position of the face image with respect to the smart mirror device 2, and the relative angle of the smart mirror device 2 with respect to the face image are all considered satisfying the requirements of the skin analyzing procedure.

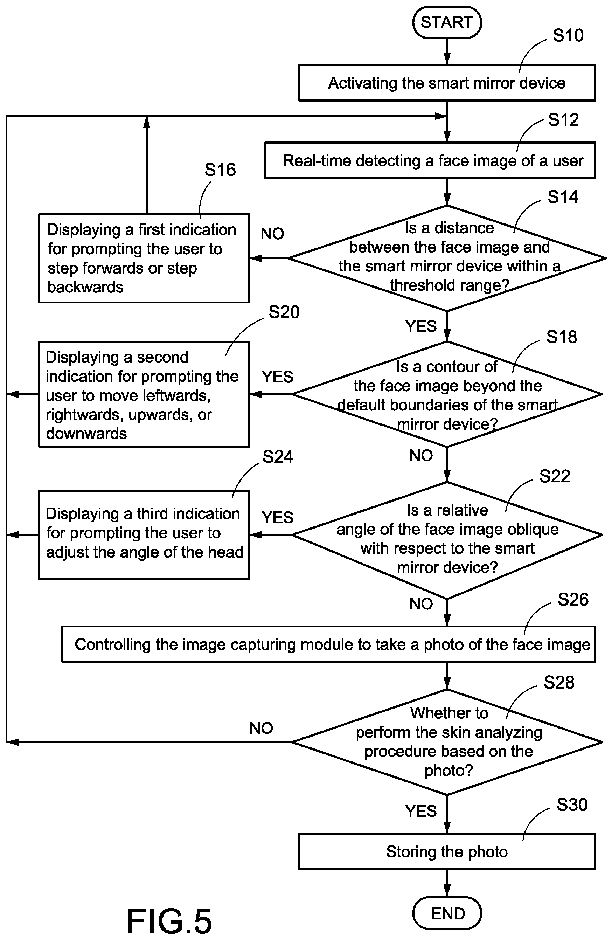

FIG. 5 is a photographing flowchart according to an embodiment of the present invention. As shown in FIG. 5, in order to apply the photographing method of the present invention, the smart mirror device 2 of the present invention has to be first activated (step S10). After being activated, the smart mirror device 2 may control the image capturing module 22 to real-time detect a face image of a user stands in front of the smart mirror device 2 (step S12). In particular, the smart mirror device 2 in step S12 controls the image capturing module 22 to detect external images continually, and determines whether a face image of a user (a specific user or a random user) is existing in the detected external images continually through the processor 20.

Next, the processor 20 performs an analysis (such a simple image analysis or a face image analysis) to the detected face image for determining whether the distance between the face image and the smart mirror device 2 (or the image capturing module 22) is within a threshold range (step S14). In other words, the processor 20 determines whether the user is standing too far from the smart mirror device 2 (will be causing a low resolution to the face image of the photo taken), or is standing too close to the smart mirror device 2 (will be causing a huge face image which has a high percentage of the entire photo taken).

If the processor 20 determines in the step S14 that the distance between the face image and the smart mirror device 2 is out of the threshold range (I.e., the distance is not within the threshold range), it may display a first indication on the display module 21 for prompting the user to step forwards or step backwards (step S16). In particular, the processor 20 is basically displaying the first indication with text or image content for prompting the user to step backwards when determining that the user is standing too close to the smart mirror device 2, and displaying the first indication with another text or image content for prompting the user to step forwards when determining that the user is standing too far from the smart mirror device 2.

After the step S16, the processor 20 goes back to the step S12 in order to continually detect the face image of the user.

In one embodiment, the processor 20 calculates a size of the detected face image (the detected face image is displayed on the display module 21), and determines that the distance between the face image and the smart mirror device 2 is within the threshold range (I.e., considers that the distance is adequate) if the ratio of the width of the face image and the width of the display module 21 is about one to two, but not limited thereto.

If determining that the distance between the face image and the smart mirror device 2 is within the threshold range in the step S14, the processor 20 further determines whether a contour of the face image is beyond any one of the default boundaries of the smart mirror device 2 (step S18), i.e., the processor 20 determines if the relative position of the user with respect to the smart mirror device 2 is too left toward, too right toward, too up toward, or too down toward.

If determining that the face image of the user is beyond any one of the default boundaries of the smart mirror device 2 in step S18, the processor 20 displays a second indication on the display module 21 with text or image content for prompting the user to move leftwards, rightwards, upwards, or downwards for adjusting his/her position with respect to the smart mirror device 2 (step S20).

In particular, the processor 20 in this embodiment is to display the second indication with a first content to prompt the user to move rightwards after determining that the face image is beyond a left boundary value of the smart mirror device 2, to display the second indication with a second content to prompt the user to move leftwards after determining that the face image is beyond a right boundary value of the smart mirror device 2, to display the second indication with a third content to prompt the user to move downwards after determining that the face image is beyond an top boundary value of the smart mirror device 2, and to display the second indication with a fourth content to prompt the user to move upwards after determining that the face image is beyond a bottom boundary value of the smart mirror device.

After the step S20, the processor 20 goes back to the step S12 for continually detecting the face image of the user.

If determining that the contour of the face image is not beyond any of the left boundary value, the right boundary value, the top boundary value, and the bottom boundary value of the smart mirror device 2 in the step S18 (i.e., the contour of the whole face image is within each and every default boundary of the smart mirror device 2), the processor 20 may further determine whether a relative angle of the face image is oblique with respect to the smart mirror device 2 (step S22). In other words, the processor 20 determines whether the face image is presenting a side face of the user (I.e., the face image tilts along a first direction), and determines whether the face image is representing a lopsided face of the user (I.e., the face image tilts along a second direction.)

If determining that the face image is oblique in the step S22, the processor 20 displays a third indication on the display module 21 for prompting the user to adjust the angle of the head with respect to the smart mirror device 2 (step S24). In particular, the processor 20 in the step S24 displays the third indication with text or image content for prompting the user to look forwards, keep the head straight, or move the head to aim at the focusing frame 3 after determining that the face image is oblique.

After the step S24, the processor 20 goes back to the step S12 for continually detecting the face image of the user.

If determining that the face image is not oblique in the step S22, the processor 20 automatically controls the image capturing module 22 to take a photo which including the detected face image (step S26).

After the step S26, the processor 20 determines whether to perform the skin analyzing procedure in accordance with the photo currently taken by the image capturing module 22 in the step S26 (step S28). In one of the exemplary embodiments, the processor 20 may display the taken photo on the display module 21 and inquires the user whether to use this photo the perform the skin analyzing procedure or not through a user interface (UI). In this embodiment, the processor 20 may receive user's response through the input module 23, and decides whether to perform the skin analyzing procedure based on the currently taken photo according to the response replied from the user.

If determining not to perform the skin analyzing procedure based on the currently taken photo due to user's response, the processor 20 abandons the photo taken in the step S26, and goes back to the step S12, so as to re-execute the step S12 to the step S26 for controlling the image capturing module 22 to re-photograph a face image that is satisfying the requirement (such as the photographing conditions) of the skin analyzing procedure as well as user's demand. If the processor determines to perform the skin analyzing procedure based on the currently taken photo due to user's response, it may further store the photo (step S30), and terminates the photographing procedure as shown in FIG. 5.

In the embodiment as disclosed in FIG. 5, the processor 20 first determines whether the distance between the face image and the smart mirror device 2 is adequate (i.e., whether the distance is within the threshold range), and determines whether the contour of the face image is beyond any of the default boundaries of the smart mirror device 2 if the distance is determined adequate. Then, the processor 20 determines whether the face image is oblique with respect to the smart mirror device 2 if the contour of the face image as a whole is determined within each and every default boundary of the smart mirror device 2. However, the above-mentioned execution order is just one of the exemplary embodiments of the present invention, it is unnecessary for the processor 20 to consider the execution order as an essential condition of photographing method.

In one of the exemplary embodiments, the processor 20 may load program codes from the storage 25 and execute the program codes to accomplish the aforementioned determination. The program codes may be, for example:

```
if (face_width < face_width_limit_far){
state = preview_too_far;
} else if (face width > face_width_limit_close){
state = preview_too_close;
} else if (face_outline_left < face_limit_left){
state = preview_too_left;
} else if (face_outline right > (preview_1080_W - face_limit left)) {
state = preview_too_right;
} else if (face_outline_top < face_limit_top) {
state = preview_too_up;
} else if (face_outline bottom > (preview_1080_H - face_limit top)) {
state = preview_too_low;
} else if ((Math.abs(90 - Math.abs(face_angleV)) > face_angle_V_limit)
(Math.abs(face_angleH) > face_angle_H_limit)){
state = preview_too_askew;
} else {
state = preview_ok;
}
```

The following description and embodiments will be interpreted with drawings in company with the program codes as disclosed above.

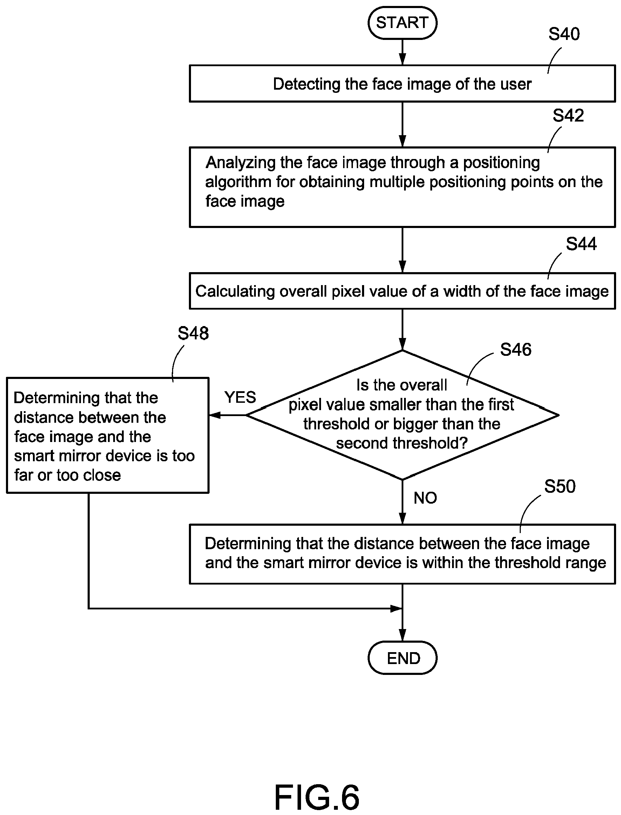

Refer to FIG. 6, which is a flowchart of distance determination according to an embodiment of the present invention. FIG. 6 is used to describe how the processor 20 of the present invention analyzes the face image of the user and determines whether the distance between the face image and the smart mirror device 2 is adequate.

First, the processor 20 detects the face image of the user through the image capturing module 22 (step S40), and analyzes the detected face image by performing a positioning algorithm to the face image for obtaining multiple positioning points on the face image (step S42). In one of the exemplary embodiments, the positioning algorithm performed by the processor 20 may be, for example, Dlib Face Landmark algorithm, which is stored in the storage 25 (not shown). In this embodiment, the processor 20 may analyze the face image through executing the Dlib Face Landmark algorithm and obtains at least 119 positioning points on the face image after the execution of the Dlib Face Landmark algorithm.

The Dlib Face Landmark algorithm is a well-known technology in image analyzing field, the detailed description about the Dlib Face Landmark algorithm is therefore omitted.

In this embodiment, the processor 20 may calculate overall pixel value of a width of the face image (also represented as "face_width") according to the multiple positioning points on the face image (step S44), compares the overall pixel value with preset thresholds (including a first threshold (also represented as "face_width_limit far") and a second threshold (also represented as "face_width_limit close")), and determines whether the overall pixel value is smaller than the first threshold or bigger than the second threshold (step S46).

In particular, the processor 20 in the step S44 determines a face type of the face image (such as an oval face, a round face, a square face, a long-shape face, an inverted triangle face, diamond-shape face, etc.) according to the multiple positioning points on the face image. Next, the processor 20 obtains the coordinate of a most-left point (which has a smallest coordinate on X-axis) and the coordinate of a most-right point (which has a biggest coordinate on X-axis) of the face image from the multiple positioning points according to the determined face type, and then calculates the overall pixel value of the width of the face image (face width) based on the most-left point and the most-right point.

If determining that the overall pixel value of the width of the face image (face width) is smaller than the first threshold or bigger than the second threshold in the step S46, the processor 20 may determine that the distance between the face image and the smart mirror device 2 is too far or too close (step S48). On the other hand, if determining that the overall pixel value of the width of the face image (face width) is bigger than the first threshold and smaller than the second threshold in the step S46, the processor 20 may determine that the distance between the face image and the smart mirror device 2 is within the threshold range (step S50), i.e., the distance between the face image and the smart mirror device 2 is adequate for being used in the aforementioned skin analyzing procedure.

In particular, the processor 20 in the step S48 determines that the distance between the face image and the smart mirror device 2 is too far if the overall pixel value of the width of the face image (face_width) is smaller than the first threshold, and the processor 20 may display the first indication with certain content for prompting the user to move forwards in the step S16 shown in FIG. 5. Besides, the processor 20 in the step S48 determines that the distance between the face image and the smart mirror device 2 is too close if the overall pixel value of the width of the face image (face width) is bigger than the second threshold, and the processor 20 may display the first indication with certain content for prompting the user to move backwards in the step S16 shown in FIG. 5.

The purpose of determining the distance between the face image and the smart mirror device 2 is to ensure that the resolution of the photo taken by the smart mirror device 2 may satisfy the requirement of the skin analyzing procedure of the present invention. In one of the exemplary embodiments, the storage 25 may further store a tolerance (for example, ten pixels, twenty pixels, etc.). In the embodiment, the first threshold can be set as a difference of half of a preview resolution of the display module 21 and the tolerance, and the second threshold can be set as a sum of half of the preview resolution of the display module 21 and the tolerance.

For example, if the preview resolution of the display module 21 is 1020p and the tolerance is ten pixels in one embodiment, the first threshold may be set as 500 ((1020/2) - 10) and the second threshold may be set as 520 ((1020/2) + 10). More specifically, the user should control the distance between himself/herself and the smart mirror device 2 to ensure that the width of the face image detected by the image capturing module 22 is approximately a half of the width of the display module 21, therefore the distance between the user and the smart mirror device 2 will be considered adequate by the processor 20 (I.e., the distance will be considered within the threshold range). However, the above description is only one of the exemplary embodiments of the present invention, but not limited thereto.

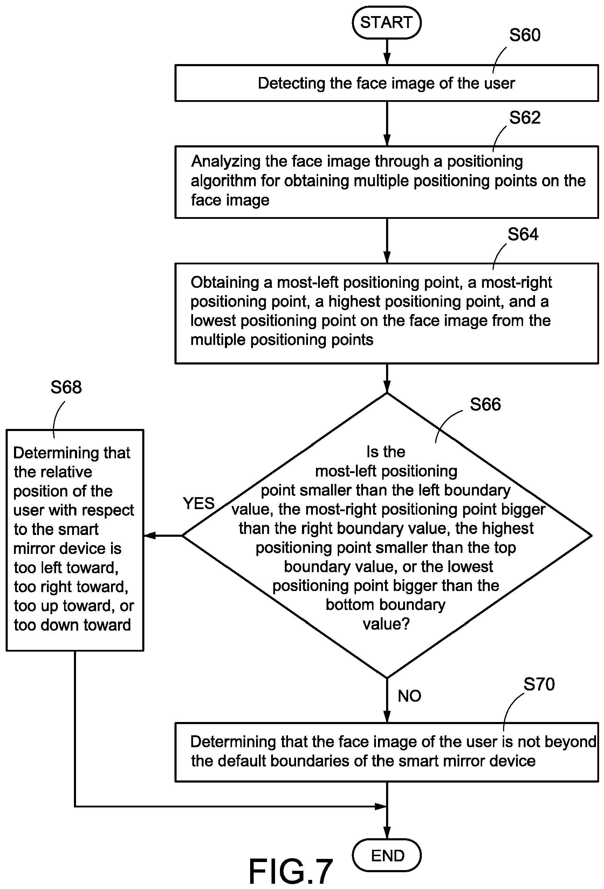

FIG. 7 is a flowchart of boundary determination according to an embodiment of the present invention. FIG. 7 is used to describe how the processor 20 in the present invention analyzes the face image of the user and determines whether the contour of the face image is beyond the default boundaries of the smart mirror device 2.

Similar to what has been disclosed in FIG. 6, the processor 20 in this embodiment first detects the face image of the user through the image capturing module 22 (step S60), and analyzes the face image through performing the Dlib Face Landmark algorithm to the face image for obtaining multiple positioning points on the face image (step S62).

Next, the processor 20 obtains the coordinate of a most-left positioning point (also represented as "face_outline_left"), the coordinate of a most-right positioning point (also represented as "face outline right"), the coordinate of a highest positioning point (also represented as "face outline top"), and the coordinate of a lowest positioning point (also represented as "face outline bottom") on the face image from the multiple positioning points (step S64). Next, the processor 20 compares the most-left positioning point, the most-right positioning point, the highest positioning point, and the lowest positioning point respectively with each of the default boundaries of the smart mirror device 2 (the default boundaries at least includes a left boundary value (also represented as "face_limit_left"), a right boundary value (also represented as "face_limit_right"), a top boundary value (also represented as "face_limit top"), and a bottom boundary value (also represented as "face_limit_bottom")), and determines whether the most-left positioning point is smaller than the left boundary value, whether the most-right positioning point is bigger than the right boundary value, whether the highest positioning point is smaller than the top boundary value, whether the lowest positioning point is bigger than the bottom boundary value (step S66).

In one of the exemplary embodiments, the processor 20 may receive user operations to pre-store the aforementioned left boundary value, the right boundary value, the top boundary value, and the bottom boundary value in the storage 25, so the boundary values can be loaded and used for comparison in the step S66.

In another one of the exemplary embodiments, the storage 25 may only store the left boundary value and the top boundary value. When executing the step S66, the processor 20 may calculate a difference of the preview resolution of the display module 21 (such as 1080p) and the left boundary value for obtaining the right boundary value (which means to calculate the right boundary value according to a first formula: "preview_1080_W - face_limit left"), and calculates a difference of the preview resolution of the display module 21 and the top boundary value for obtaining the bottom boundary value (which means to calculate the bottom boundary value according to a second formula: "preview_1080_H - face_limit_top"). However, the above description is just one of the exemplary embodiments of the present invention, not limited thereto.

If determining that one of the positioning points of the face image is beyond the corresponding one of the default boundaries of the smart mirror device 2 in the step S66, the processor 20 determines that the relative position of the user with respect to the smart mirror device 2 is too left toward, too right toward, too up toward, or too down toward (step S68). In particular, the processor 20, in the step S68, determines that the face image is too left toward if the most-left positioning point of the face image is smaller than the left boundary value of the default boundaries; determines that the face image is too right toward if the most-right positioning point of the face image is bigger than the right boundary value of the default boundaries; determines that the face image is too up toward if the highest positioning point of the face image is smaller than the top boundary value of the default boundaries; and, determines that the face image is too down toward if the lowest positioning point is bigger than the bottom boundary value of the default boundaries.

It should be noticed that the processor 20, in the step S20 shown in FIG. 5, is to display the second indication with certain content for prompting the user to move rightwards if the most-left positioning point is determined smaller than the left boundary value, to display the second indication with certain content for prompting the user to move leftwards if the most-right positioning point is determined bigger than the right boundary value, to display the second indication with certain content for prompting the user to move downwards if the highest positioning point is determined smaller than the top boundary value, and to display the second indication with certain content for prompting the user to move upwards if the lowest positioning point is determined bigger than the bottom boundary value.

If determining that the most-left positioning point is not smaller than the left boundary value, the most-right positioning point is not bigger than the right boundary value, the highest positioning point is not smaller than the top boundary value, and the lowest positioning point is not bigger than the bottom boundary value in the step S66, the processor 20 may then determine that the face image of the user is not beyond the default boundaries of the smart mirror device 2 (step S70).

It should be mentioned that the processor 20, in one of the exemplary embodiments, may generate the aforementioned focusing frame 3 and display the generated focusing frame 3 on the display module 21 according to the default boundaries (at least involving the left boundary value, the right boundary value, the top boundary value, and the bottom boundary value), so as to assist the user to adjust his/her position with respect to the smart mirror device 2, and ensures that the image capturing module 22 can detect a face image which is located within the default boundaries of the smart mirror device 2. Therefore, the image capturing module 22 of the smart mirror device 2 is avoided from photographing the face image with bad position and affecting the analyzing result.

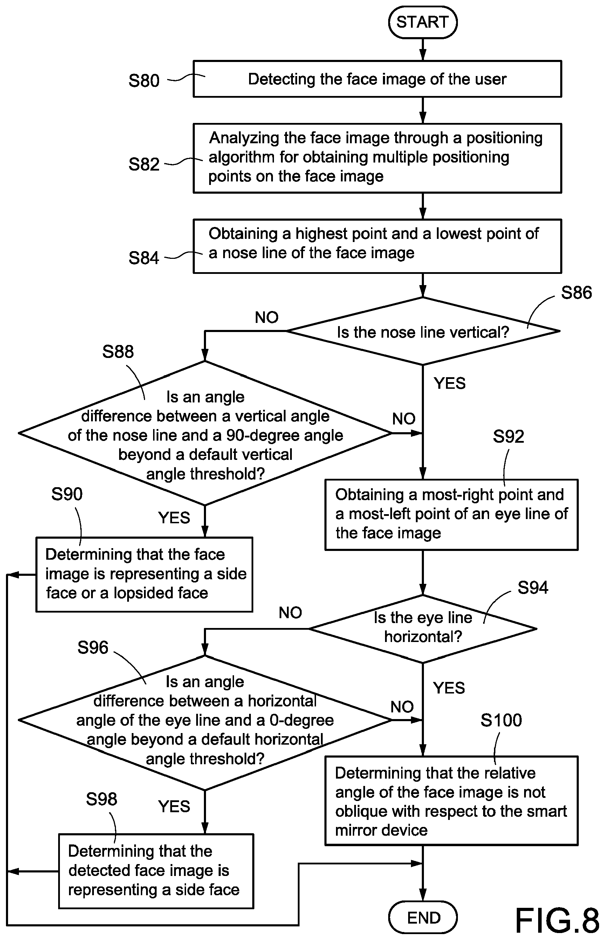

FIG. 8 is a flowchart of oblique determination according to an embodiment of the present invention. FIG. 8 is used to describe how the processor 20 in the present invention analyzes the face image of the user and determines if the relative angle of the face image is oblique with respect to the smart mirror device 2.

Similar to what has been disclosed in FIG. 6 and FIG. 7, the processor 20 in this embodiment first detects the face image of the user through the image capturing module 22 (step S80), and analyzes the face image through performing the Dlib Face Landmark algorithm to the face image for obtaining multiple positioning points on the face image (step S82).

In this embodiment, the processor 20 first identifies a vertical angle of the face image (also represented as "face_angleV") and a horizontal angle of the face image (also represented as "face_angleH") according to the multiple positioning points, then determines whether an angle difference between the vertical angle and a 90-degree angle is bigger than a vertical angle threshold (also represented as "face_angle_V_limit"), and determines whether an angle difference between the horizontal angle and a 0-degree angle is bigger than a horizontal angle threshold (also represented as "face_angle_H_limit"). Then, the processor 20 determines that the face image is oblique if the angle difference between the vertical angle and the 90-degree angle is determined bigger than the vertical angle threshold or the angle difference between the horizontal angle and the 0-degree angle is determined bigger than the horizontal angle threshold.

In one of the exemplary embodiments, the processor 20 may load program codes from the storage 25 and execute the program codes to calculate the vertical angle as well as the horizontal angle of the face image. The program codes may be, for example:

$$V1 = facePointList.get(CSDK.FP\_NOSE\_EYES).y - facePointList.get(CSDK.FP\_NOSE\_BOTTOM).y;$$

$$V2 = facePointList.get(CSDK.FP\_NOSE\_EYES).x - facePointList.get(CSDK.FP\_NOSE\_BOTTOM).x;$$

```
if (v2 != 0){
    face_angleV = (float)(Math.atan(v1/v2)*180.0/Math.PI);
    } else {
    face_angleV = 90;
    }
```

V3 = facePointList.get(CSDK.FP_RIGHT_EYE_OUTER_CORNER).x - facePointList.get(CSDK.FP_LEFT_EYE_OUTER_CORNER).x;

V4 = facePointList.get(CSDK.FP_RIGHT_EYE_OUTER_CORNER).y - facePointList.get(CSDK.FP_LEFT_EYE_OUTER_CORNER).y;

```
if (v4 != 0){
    face_angleH = (float)(Math.atan(v3/v4)*180.0/Math.PI);
    } else {
    face_angleH = 0;
    }
```

Please refer back to FIG. 8. After the step S82, the processor 20 may generate a virtual nose line on the face image according to the multiple positioning point, and obtains a highest point (also represented as "FP_NOSE_EYES") and a lowest point (also represented as "FP_NOSE_BOTTOM") of the nose line (step S84). In this embodiment, the virtual nose line is generated straight along the nose of the face image. Next, the processor 20 determines whether the nose line is vertical based on the highest point and the lowest point (step S86), i.e., determines whether the vertical angle of the face image (also represented as "angleV") is 90 degrees or not. Also, the processor 20 determines that the face image is representing a side face or a lopsided face if the nose line is determined not vertical (step S90).

In particular, if determining that the nose line is not vertical in the step S86, the processor 20 further calculates an angle difference between the angle of the nose line (I.e., vertical angle) and a 90-degree angle (uses a third formula to calculate the angle difference: "Math.abs(90 - Math.abs(face_angleV))"), and determines whether the angle difference is beyond a default vertical angle threshold (also represented as "face_angle_V_limit")(step S88).

In this embodiment, the processor 20 determines that the relative angle of the face image is oblique with respect to the smart mirror device 2 if the above angle difference between the angle of the nose line and the 90-degree angle is beyond the vertical angle threshold, i.e., determines that the detected face image is representing a side face or a lopsided face (step S90). Also, the processor 20 determines that the nose line is vertical (i.e., the relative angle of the face image is not oblique with respect to the smart mirror device 2) if the angle difference between the angle of the nose line and the 90-degree angle is not beyond the vertical angle threshold, and then the processor 20 proceeds to execute step S92.

If determining that the nose line is vertical, the processor 20 may further generate a virtual eye line on the face image according to the multiple positioning points, and obtains a most-right point (also represented as "FP_RIGHT_EYE_OUTER_CORNER") and a most-left point (also represented as "FP_LEFT_EYE_OUTER_CORNER") of the eye line (step S92). In this embodiment, the virtual eye line is generated straight along two eyes of the face image. Next, the processor 20 determines whether the eye line is horizontal or not according to the most-right point and the most-left point (step S94), i.e., determines whether the horizontal angle of the eye line (also represented as "angleH") is 0 degree or 180 degrees. Further, the processor 20 determines that the face image is representing a side face if the eye line is determined not horizontal (step S98).

In particular, if determining that the eye line is not horizontal in the step S94, the processor 20 further calculates an angle difference between the angle of the eye line (I.e., the horizontal angle) and a 0-degree angle, and determines whether the angle difference is beyond a default horizontal angle threshold (also represented as "face_angle_H_limit") (step S96). In this embodiment, the processor 20 determines that the relative angle of the face image is oblique with respect to the smart mirror device 2 if the angle difference between the angle of the eye line and the 0-degree angle (or a 180-degree angle) is determined beyond the horizontal angle threshold, i.e., the processor 20 determines that the detected face image is representing a side face (step S98).

Besides, the processor 20 in this embodiment may determine that the relative angle of the face image of the user with respect to the smart mirror device 2 is adequate (i.e., is not oblique) if the nose line of the face image is determined vertical, the angle difference between the nose line and the 90-degree angle is not beyond the vertical angle threshold, the eye line of the face image is determined horizontal, and the angle different between the eye line and the 0-degree angle (or the 180-degree angle) is not beyond the horizontal angle threshold (step SI00).

In one of the exemplary embodiments, the aforementioned vertical angle threshold and horizontal angle threshold are +5 degrees to -5 degrees. In other words, the processor 20 may consider the face image not oblique with respect to the smart mirror device 2 if the vertical angle of the face image is within 85 degrees to 95 degrees and the horizontal degree of the face image is within -5 degrees to 5 degrees.

It should be noticed that the processor 20, in the step S86, is to obtain the coordinate of a highest point on X-axis and also the coordinate of a lowest point on X-axis of the nose line (may obtains these coordinates by a forth formula: "facePointList.get(CSDK.FP_NOSE_EYES).x" and a fifth formula: "facePointList.get(CSDK.FP_NOSE_BOTTOM).x"), and determines that the nose line is vertical if the coordinate of the highest point on X-axis equals to the coordinate of the lowest point on X-axis (i.e., the difference of these two coordinates on X-axis is 0).

Besides, the processor 20 in the step S94, is to obtain the coordinate of a most-right point on Y-axis and also the coordinate of a most-left point on Y-axis of the eye line (obtains these coordinates by a sixth formula: "facePointList.get(CSDK.FP_NOSE_EYE_OUTER_CORNER).y" and a seventh formula: "facePointList.get(CSDK.FP_LEFT_EYE_OUTER_CORNER).y"), and determines that the eye line is horizontal if the coordinate of the most-right point on Y-axis equals to the coordinate of the most-left point on Y-axis(i.e., the difference of these two coordinates on y-axis is 0).

As mentioned above, the present invention may prevent the image capturing module 22 of the smart mirror device 2 from photographing a face image with an oblique angle and affecting the analyzing result through determining the relative angle of face image of the user with respect to the smart mirror device 2 before photographing, which makes the photographing action more effective.

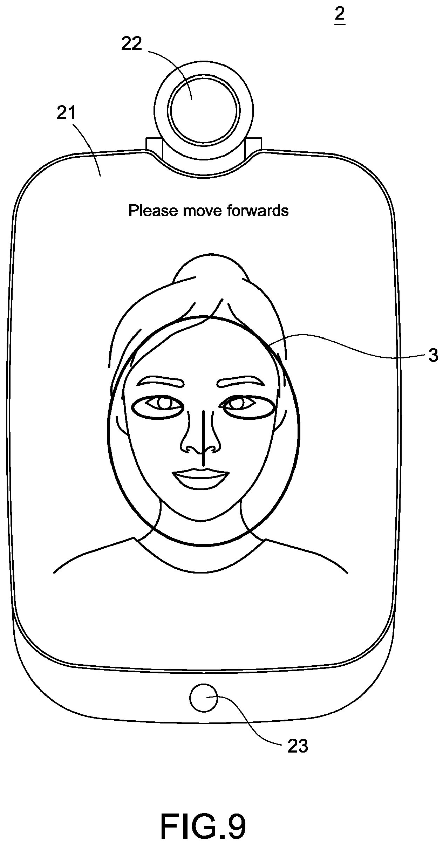

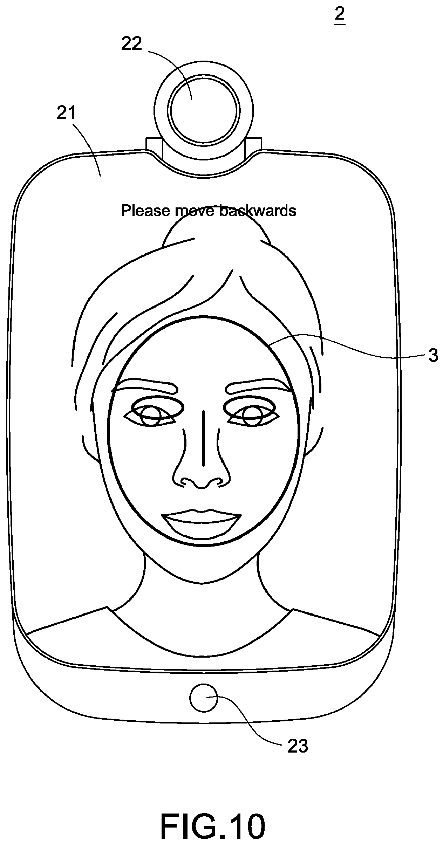

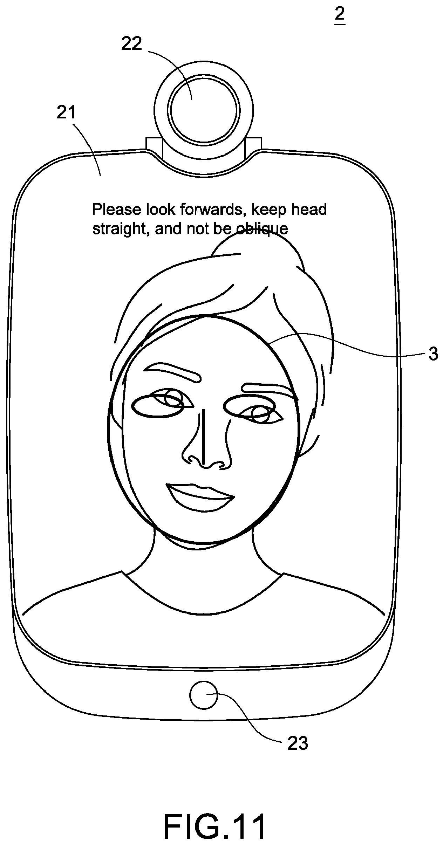

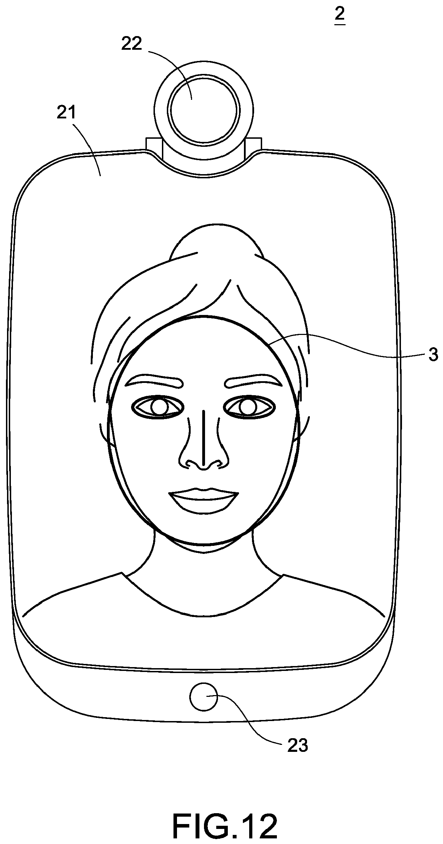

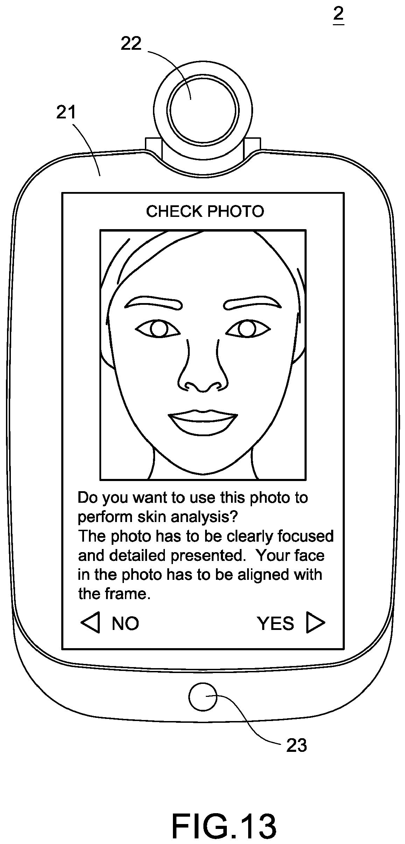

Please refer FIG. 9 to FIG. 13, wherein FIG. 9 is a schematic diagram of detecting action according to a first embodiment of the present invention, FIG. 10 is a schematic diagram of detecting action according to a second embodiment of the present invention, FIG. 11 is a schematic diagram of detecting action according to a third embodiment of the present invention, FIG. 12 is a schematic diagram of detecting action according to a fourth embodiment of the present invention, and FIG. 13 is a schematic diagram of detecting action according to a fifth embodiment of the present invention.

In the present invention, the smart mirror device 2 not only displays the aforementioned focusing frame 3 on the display module 21, but also displays at least the first indication, the second indication, and the third indication through the user interface.

As shown in FIG. 9, if the face image of the user is detected by the image capturing module 22 and the distance between the face image and the smart mirror device 2 is determined by the processor 20 and considered too far (i.e., the user is considered too far from the smart mirror device 2), the processor 20 may display the aforementioned first indication with certain content (such as "please move forwards") on the display module 21 through the user interface for prompting the user to move forwards.

As shown in FIG. 10, if the face image of the user is detected by the image capturing module 22 and the distance between the face image and the smart mirror device 2 is determined by the processor 20 and considered too close (i.e., the user is considered too close to the smart mirror device 2), the processor 20 may display the aforementioned first indication with certain content (such as "please move backwards") on the display module 21 through the user interface for prompting the user to move backwards.

As shown in FIG. 11, if the face image of the user is detected by the image capturing module 22 and the relative angle of the face image with respect to the smart mirror device 2 is determined by the processor 20 and considered oblique, the processor 20 may display the aforementioned third indication with certain content (such as "please keep straight forwards") on the display module 21 through the user interface for prompting the user to look forwards, keep his/her head straight, and not be oblique.

As shown in FIG. 12, if the face image of the user is detected by the image capturing module 22 and the processor 20 determines that the distance between the face image and the smart mirror device 2 is within the threshold range, the contour of the face image as a whole is not beyond the default boundaries of the smart mirror device 2, and the relative angle of the face image with respect to the smart mirror device 2 is not oblique, the processor 20 may automatically control the image capturing module 22 to take a photo for the user that includes the face image for being analyzed.

As shown in FIG. 13, after the photo including the face image is taken by the image capturing module 22, the processor 20 may further display the photo on the display module 21, so the user may confirm, through the input module 23, whether to use this photo to perform the aforementioned skin analyzing procedure or not.

By using the photographing method of the present invention, the smart mirror device 2 can be prevented from taking photos which cannot satisfy the requirements of the skin analyzing procedure. As a result, the accuracy of the analyzing result of the skin analyzing procedure may be improved by using the photos taken under the photographing method of the present invention.

## Claims

1. A method for automatically detecting and photographing face image, applied for a smart mirror device (2) having a processor (20), a display module (21), and an image capturing module (22), comprising following steps:

a) real-time detecting a face image of a user (4) through the image capturing module (22);

b) determining whether a distance between the face image and the smart mirror device (2) is within a threshold range by the processor (20);

c) displaying a first indication on the display module (21) for prompting the user (4) to move forwards or backwards if the distance between the face image and the smart mirror device (2) is not within the threshold range;

d) determining whether a contour of the face image is beyond any of multiple default boundaries of the smart mirror device (2) by the processor (20);

e) displaying a second indication on the display module (21) for prompting the user (4) to move upwards, downwards, leftwards, or rightwards if the contour of the face image is beyond any of the default boundaries;

f) determining whether a relative angle of the face image with respect to the smart mirror device (2) is oblique by the processor (20);

g) displaying a third indication on the display module (21) for prompting the user (4) to adjust the angle of a head if the face image is determined oblique; and

h) controlling the image capturing module (22) automatically to take a photo of the face image whenever the distance between the face image and the smart mirror device (2) is determined within the threshold range, the contour of the face image is determined not beyond the default boundaries, and the face image is determined not oblique.

2. The method for automatically detecting and photographing face image in claim 1, further comprising following steps:

i) determining whether to perform a skin analyzing procedure of the smart mirror device (2) based on the photo after the step h); and

j) abandoning the photo and re-executing the step a) to the step h) if the skin analyzing procedure is determined not to be performed based on the photo.

3. The method for automatically detecting and photographing face image in claim 1, wherein the step b) comprises following steps:

b1) analyzing the face image through performing a positioning algorithm to the face image for obtaining multiple positioning points on the face image;

b2) calculating overall pixel value of a width of the face image according to the multiple positioning points;

b3) comparing the overall pixel value with a first threshold and a second threshold;

b4) determining that the face image is too far from the smart mirror device (2) if the overall pixel value is smaller than the first threshold;

b5) determining that the face image is too close to the smart mirror device (2) if the overall pixel value is bigger than the second threshold; and

b6) determining that the distance between the face image and the smart mirror device (2) is within the threshold range if the overall pixel value is bigger than the first threshold and smaller than the second threshold.

4. The method for automatically detecting and photographing face image in claim 3, wherein the positioning algorithm is Dlib Face Landmark algorithm, an amount of the multiple positioning points is 119 points, and the step c) is to display the first indication with a content for prompting the user (4) to move forwards when the overall pixel value is smaller than the first threshold, and to display the first notification with another content for prompting the user (4) to move backwards when the overall pixel value is bigger than the second threshold.

5. The method for automatically detecting and photographing face image in claim 3, wherein the first threshold is a difference of half of a preview resolution of the display module (21) and a tolerance, and the second threshold is a sum of half of the preview resolution of the display module (21) and the tolerance.

6. The method for automatically detecting and photographing face image in claim 1, wherein the step d) comprises following steps:

d1) analyzing the face image through performing a positioning algorithm to the face image for obtaining multiple positioning points on the face image;

d2) capturing a most-left positioning point, a most-right positioning point, a highest positioning point, and a lowest positioning point on the face image from the multiple positioning points;

d3) comparing the most-left positioning point, the most-right positioning point, the highest positioning point, and the lowest positioning point respectively with a left boundary value, a right boundary value, a top boundary value, and a bottom boundary value of the multiple default boundaries of the smart mirror device (2);

d4) determining that the face image is too left toward if the most-left positioning point is smaller than the left boundary value;

d5) determining that the face image is too right toward if the most-right positioning point is bigger than the right boundary value;

d6) determining that the face image is too up toward if the highest positioning point is smaller than the top boundary value;

d7) determining that the face image is too down toward if the lowest positioning point is bigger than the bottom boundary value; and

d8) determining that the face image is not beyond the default boundaries if the most-left positioning point is not smaller than the left boundary value, the most-right positioning point is not bigger than the right boundary value, the highest positioning point is not smaller than the top boundary value, and the lowest positioning point is not bigger than the bottom boundary value.

7. The method for automatically detecting and photographing face image in claim 6, wherein the positioning algorithm is Dlib Face Landmark algorithm, an amount of the multiple positioning points is 119 points, and the step e) is to display the second indication with a first content for prompting the user (4) to move rightwards when the most-left positioning point is smaller than the left boundary value, to display the second indication with a second content for prompting the user (4) to move leftwards when the most-right positioning point is bigger than the right boundary value, to display the second indication with a third content for prompting the user (4) to move downwards when the highest positioning point is smaller than the top boundary value, and to display the second indication with a fourth content for prompting the user (4) to move upwards when the lowest positioning point is bigger than the bottom boundary value.

8. The method for automatically detecting and photographing face image in claim 6, wherein the processor (20) generates a focusing frame (3) based on the left boundary value, the right boundary value, the top boundary value, and the bottom boundary value and displays the focusing frame (3) on the display module (21).

9. The method for automatically detecting and photographing face image in claim 6, wherein the right boundary value is a difference of a preview resolution of the display module (21) and the left boundary value, the bottom boundary value is a difference of the preview resolution of the display module (21) and the top boundary value.

10. The method for automatically detecting and photographing face image in claim 1, wherein the step f) comprises following steps:

f1) analyzing the face image through performing a positioning algorithm to the face image for obtaining multiple positioning points on the face image;

f2) capturing a highest point and a lowest point of a nose line of the face image from the multiple positioning points, wherein the nose line is virtually generated straight along a nose of the face image;

f3) determining whether the nose line is vertical according to the highest point and the lowest point;

f4) determining that the face image is representing a side face or a lopsided face if the nose line is not vertical;

f5) capturing a most-right point and a most-left point of an eye line of the face image from the multiple positioning points, wherein the eye line is virtually generated straight along two eyes of the face image;

f6) determining whether the eye line is horizontal according to the most-right point and the most-left point;

f7) determining that the face image is representing the side face if the eye line is not horizontal; and

f8) determining that the face image is not oblique if the nose line is determined vertical and the eye line is determined horizontal.

11. The method for automatically detecting and photographing face image in claim 10, wherein the step f4) further comprises following steps:

f41) determining a first angle difference between a vertical angle of the nose line with a 90-degree angle when the nose line is determined not vertical;

f42) determining that the nose line is vertical when the first angle difference is smaller than a vertical angle threshold; and

f43) determining that the face image is representing the side face or the lopsided face when the first angle difference is bigger than the vertical angle threshold.

12. The method for automatically detecting and photographing face image in claim 11, wherein the step f7) further comprises following steps:

f71) determining a second angle difference between a horizontal angle of the eye line and a 0-degree angle when the eye line is determined not horizontal;
f72) determining that the eye line is horizontal when the second angle difference is smaller than a horizontal angle threshold; and
f73) determining that the face image is representing the side face when the second angle difference is bigger than the horizontal angle threshold.

13. The method for automatically detecting and photographing face image in claim 12, wherein the vertical angle threshold and the horizontal angle threshold are +5 degrees to -5 degrees.

14. The method for automatically detecting and photographing face image in claim 10, wherein the step f3) is to obtain a coordinate of the highest point on X-axis and another coordinate of the lowest point on X-axis, and to determine that the nose line is vertical if the coordinate of the highest point on X-axis equals to the coordinate of the lowest point on X-axis.

15. The method for automatically detecting and photographing face image in claim 10, wherein the step f7) is to obtain a coordinate of the most-right point on Y-axis and another coordinate of the most-left point on Y-axis, and to determine that the eye line is horizontal if the coordinate of the most-right point on Y-axis equals to the coordinate of the most-left point on Y-axis.

1

12

11

13

FIG.1
(Related Art)

FIG.2

FIG.3

2

22

21

4

3

23

FIG.4

START

S10

Activating the smart mirror device

S12

Real-time detecting a face image of a user

S14

Is a distance between the face image and the smart mirror device within a threshold range?

S16

NO → Displaying a first indication for prompting the user to step forwards or step backwards

YES ↓

S18

Is a contour of the face image beyond the default boundaries of the smart mirror device?

S20

YES → Displaying a second indication for prompting the user to move leftwards, rightwards, upwards, or downwards

NO ↓

S22

Is a relative angle of the face image oblique with respect to the smart mirror device?

S24

YES → Displaying a third indication for prompting the user to adjust the angle of the head

NO ↓

S26

Controlling the image capturing module to take a photo of the face image

S28

Whether to perform the skin analyzing procedure based on the photo?

NO →

YES ↓

S30

Storing the photo

END

FIG.5

START

S40

Detecting the face image of the user

S42

Analyzing the face image through a positioning algorithm for obtaining multiple positioning points on the face image

S44

Calculating overall pixel value of a width of the face image

S46

Is the overall pixel value smaller than the first threshold or bigger than the second threshold?

S48

YES → Determining that the distance between the face image and the smart mirror device is too far or too close

NO

S50

Determining that the distance between the face image and the smart mirror device is within the threshold range

END

FIG.6

START
S60
Detecting the face image of the user

S62
Analyzing the face image through a positioning algorithm for obtaining multiple positioning points on the face image

S64
Obtaining a most-left positioning point, a most-right positioning point, a highest positioning point, and a lowest positioning point on the face image from the multiple positioning points

S66
Is the most-left positioning point smaller than the left boundary value, the most-right positioning point bigger than the right boundary value, the highest positioning point smaller than the top boundary value, or the lowest positioning point bigger than the bottom boundary value?

YES

S68
Determining that the relative position of the user with respect to the smart mirror device is too left toward, too right toward, too up toward, or too down toward

NO
S70
Determining that the face image of the user is not beyond the default boundaries of the smart mirror device

END

FIG.7

START

S80 — Detecting the face image of the user

S82 — Analyzing the face image through a positioning algorithm for obtaining multiple positioning points on the face image

S84 — Obtaining a highest point and a lowest point of a nose line of the face image

S86 — Is the nose line vertical?

NO

S88 — Is an angle difference between a vertical angle of the nose line and a 90-degree angle beyond a default vertical angle threshold?

YES

NO

S92 — Obtaining a most-right point and a most-left point of an eye line of the face image

S90 — Determining that the face image is representing a side face or a lopsided face

S94 — Is the eye line horizontal?

NO

YES

S96 — Is an angle difference between a horizontal angle of the eye line and a 0-degree angle beyond a default horizontal angle threshold?

NO

S100 — Determining that the relative angle of the face image is not oblique with respect to the smart mirror device

YES

S98 — Determining that the detected face image is representing a side face

END

FIG.8

2

22

21

Please move forwards

3

23

FIG.9

Please move backwards

FIG.10

2

22

21

Please look forwards, keep head straight, and not be oblique

3

23

# FIG.11

FIG.12

2

22

21

CHECK PHOTO

Do you want to use this photo to perform skin analysis?
The photo has to be clearly focused and detailed presented. Your face in the photo has to be aligned with the frame.

◁ NO                    YES ▷

23

FIG.13

Europäisches Patentamt
European Patent Office
Office européen des brevets

## EUROPEAN SEARCH REPORT

Application Number

EP 19 18 9123

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 211 879 A1 (BEIJING XIAOMI MOBILE SOFTWARE CO LTD [CN]) 30 August 2017 (2017-08-30) * the whole document * | 1-15 | INV. H04N5/232 G11B27/34 G11B27/28 G11B27/031 |
| A | US 2018/137648 A1 (KANG SEOK-MYONG [KR] ET AL) 17 May 2018 (2018-05-17) * the whole document * | 1-15 | ADD. A45D42/00 |
| A | WO 2018/104356 A1 (KONINKLIJKE PHILIPS NV [NL]) 14 June 2018 (2018-06-14) * the whole document * | 1-15 | |
| A | US 2014/240544 A1 (KIM KYUNGHWA [KR] ET AL) 28 August 2014 (2014-08-28) * the whole document * | 1-15 | |
| A | US 2018/144192 A1 (KIM SANGYONG [KR] ET AL) 24 May 2018 (2018-05-24) * the whole document * | 1-15 | TECHNICAL FIELDS SEARCHED (IPC) |
| A | US 2018/165437 A1 (SHIM HONGJO [KR] ET AL) 14 June 2018 (2018-06-14) * the whole document * | 1-15 | G11B H04N G06K A45D A45F |

The present search report has been drawn up for all claims

| Place of search | Date of completion of the search | Examiner |
|---|---|---|
| The Hague | 7 February 2020 | Bruma, Cezar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 9123

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2020

| Patent document cited in search report | | | Publication date | Patent family member(s) | | | Publication date |
|---|---|---|---|---|---|---|---|
| EP 3211879 | A1 | | 30-08-2017 | CN | 107122697 | A | 01-09-2017 |
| | | | | EP | 3211879 | A1 | 30-08-2017 |
| | | | | US | 2017244891 | A1 | 24-08-2017 |
| | | | | WO | 2017143778 | A1 | 31-08-2017 |
| US 2018137648 | A1 | | 17-05-2018 | NONE | | | |
| WO 2018104356 | A1 | | 14-06-2018 | BR | 112019011426 | A2 | 15-10-2019 |
| | | | | CN | 110050251 | A | 23-07-2019 |
| | | | | EP | 3552079 | A1 | 16-10-2019 |
| | | | | WO | 2018104356 | A1 | 14-06-2018 |
| US 2014240544 | A1 | | 28-08-2014 | KR | 20140105313 | A | 01-09-2014 |
| | | | | US | 2014240544 | A1 | 28-08-2014 |
| US 2018144192 | A1 | | 24-05-2018 | US | 2018144192 | A1 | 24-05-2018 |
| | | | | WO | 2016190484 | A1 | 01-12-2016 |
| US 2018165437 | A1 | | 14-06-2018 | KR | 20180068127 | A | 21-06-2018 |
| | | | | US | 2018165437 | A1 | 14-06-2018 |
| | | | | WO | 2018110891 | A1 | 21-06-2018 |

EPO FORM P0459

For more details about this annex : see Official Journal of the European Patent Office, No. 12/82